# EUROPEAN PATENT APPLICATION

(11) **EP 3 457 333 A1**
(43) Date of publication of application: **20.03.2019**
(21) Application number: 17191119.1
(22) Date of filing: 14.09.2017
(51) Int. Cl.: G06N 3/04, G06N 5/02

(54) **METHOD FOR GENERATING AT LEAST ONE RECOMMENDATION**

(71) Applicant: Siemens Aktiengesellschaft, 80333 München (DE); SIEMENS INDUSTRIAL TURBOMACHINERY A.B., 612 83 Finspong (SE); Siemens S.p.A., 20126 Milano (IT)
(72) Inventor: HUBAUER, Thomas, 85748 Garching bei München (DE); BECHINI, Giovanni, 51010 Uzzano (IT); KARLSSON, Christer, 58229 Linköping (SE)

(57) **Abstract**

The present invention relates to method for generating at least one recommendation, comprising the steps of receiving a case embedding, generating the at least one recommendation based on the case embedding using deep learning and outputting the at least one recommendation. Further, the present invention relates to a generator unit, a device and a computer program product.

## Description

### 1. Technical field

The present invention relates to a method for generating at least one recommendation, a corresponding generator unit, device for generating at least one recommendation and a corresponding computer program product.

### 2. The prior art

Remote monitoring and diagnostics of rotating equipment is indispensable in practice. Remote diagnostics of gas turbines is a complex task which can be divided into three steps: (1) Detection, (2) Isolation, and (3) Diagnosis. Recently, there has been an increased demand for a systematic approach to plant process safety, increased reliability and availability, lower maintenance cost, and continuous awareness about the equipment health status. This demand challenges the existing tool landscape which typically builds on an adoption of condition monitoring solutions and expert systems. Specifically, fault detection, fault isolation, failure mechanism definition and diagnosis definition as part of the systematic diagnostics are fundamental functionality to support engineers in their decision making process, until the corrective action recommendation.

However, due to the technical complexity caused by the large number of subsystems and process flows, diagnosis for industrial gas turbines is non-trivial, and requires multidisciplinary expertise of various engineers from domains such as system mechanics, aerodynamics, and thermodynamics, to name only a few.

Only recently, the growth of computational power gave autonomous decision making methods from the area of artificial intelligence a second wind, making available new methods and tools to tackle the challenges outlined before. One such example is Deep Learning, a powerful method that makes use of GPU hardware to build models with unseen capabilities to automatically construct relevant features from data.

During the analysis phase, the expert at the remote diagnostics center (RDC) normally enriches the sensor data available in the above mentioned step (1) with his findings and hypotheses about failure modes and solutions, all of which are documented in a ticketing system (e.g. Salesforce) as free text in natural language. While this unstructured (or semi-structured) way of documentation is convenient for the technician, it makes it very hard to share the knowledge expressed in these annotations with other colleagues. The information in these tickets is used to propose solutions based on similar cases from the past. The challenge is therefore to provide a system which can automatically propose relevant historic cases to the technician during diagnosis, where both sensor data as well as (intermediary) human-generated content, mostly textual information, is taken into account. Furthermore, it is not practically feasible to have a solution that needs extensive manual tuning of parameters to perform well. Up to now, the diagnostic process in the remote diagnostic center (RDC) is largely manual and lacks support through software tools.

Several methods and systems for generating first-level support recommendations for current critical situations are known from the prior art. The recommendations aim at resolving observed problems of technical systems or reducing future damages caused by the systems. Moreover, other recommendations can be directed to the optimization of resource consumption, the output of the system, increase of lifetime by reducing wear.

According to prior art, for example machine data and human-generated texts are jointly analyzed to create a unified representation of the current situation. Similar historic situations can be identified from a case base using this unified representation and presented to an engineer along with further solutions. Then, the engineer can pick relevant parts from the solutions and combine them into one text. Finally, the resulting text is provided to the customer.

In other words, current approaches simply result in a list of similar known cases as possible solutions. The engineer has to manually find the best or most appropriate solution in this list. However, this approach is not applicable in various diagnostic scenarios. In many scenarios, specific cases cannot be assigned to a similar known case. Accordingly, no solution or no appropriate solution can be found often. Moreover, especially in the scenario of first-level support, users require one clear recommendation instead of a list of potentially relevant cases from which they have to chose appropriate measures to take.

Furthermore, diagnostic scenarios may require a complex dialogue with the engineer. For example, a first recommendation indicates that the engineer should check whether the measured values are in a pre-defined range. If the current values are not within the pre-defined range, the engineer will require at least one further recommendation. However, the dialogue cannot be realized with common approaches.

It is therefore an objective of the invention to provide a method for generating at least one recommendation, which is efficient and interactive.

### 3. Summary of the invention

This problem is according to one aspect of the invention solved by Method for generating at least one recommendation, comprising the steps of:
a. receiving a case embedding,
b. generating the at least one recommendation based on the case embedding using deep learning, and
c. outputting the at least one recommendation.

Accordingly, a case embedding is received as input in the first step. The case embedding can be defined as embedded case study which is a case study containing more than one sub-unit of analysis, such as distinct data documenting the current state of investigations and findings concerning wind turbines or other units. The method is advantageously applicable to process distinct input data types, including machine data and human-generated data. The machine data is for example audio, image or video data. The human-generated data is for example text data.

Then, the input is processed into one or more recommendations as output or result in a further step by means of deep learning. Distinct deep learning approaches or methods can be selected depending on the data type and application field. Thus, the method advantageously ensures a high degree of flexibility.

Finally, the one or more recommendation is outputted. For example, the recommendation can be outputted to one or more users or further processed by a computing unit for applying the recommendation. In other words, the recommendation can be manually or automatically applied.

The recommendation can be used in various application fields, including diagnostic scenarios. In an exemplary diagnostic scenario, high vibrations in a bearing or other unit of e.g. a wind turbine is observed by a user, such as an expert for wind turbines performing maintenance works. After this observation, the user needs a recommendation to accurately or correctly handle the vibrations. Accordingly, the term "recommendation" can be considered as solution to a technical problem or task.

The method according to the invention outputs the appropriate recommendation automatically to the user. The recommendation indicates an instruction for the user to check whether specific measurements are in range or not. If the measurements are out of range, the user can get further recommendations. This way, the gas turbine diagnostics can be optimized. The optimized diagnostics can be advantageously used to adjust the operation of rotation equipment and/or to maintain the rotation equipment. Alternatively, instead of manually applying the recommendations by a user, the recommendations can be automatically handled without user interaction. This way, the present invention allows the generation of the at least one recommendation in an efficient and user-friendly manner.

In one aspect, the case embedding is a unified representation, in particular a unified numeric vector.

In a further aspect, the unified representation is a concatenation of a plurality of numeric vectors, including text feature vectors or vectors representing measured data.

In a further aspect, deep learning uses a case based reasoning learning method selected from the group comprising: Long Short Term Memory (LSTM) recurrent neural network or deep convolutional Generative Adversarial Networks (GAN).

Deep learning can use a case based reasoning learning method. For example, a natural language training method can be used for extracting semantic information. Different weights can be applied to different types of text features.

In a further aspect, the at least one recommendation is outputted as machine-readable or human-readable data. Accordingly, the recommendation can be processed or applied by machine or human, such as a computing unit or user. This way, the flexibility regarding the application field is ensured.

In a further aspect, the method comprises the further step of extending the case embedding with further information after step a. for generating the at least one recommendation based on the extended case embedding using deep learning. Accordingly, the method allows for user interaction. Consequently, the case embedding can advantageously be updated with user content and be improved in this manner.

In a further aspect, outputting the at least one recommendation to a user for applying the at least one recommendation, in particular as a solution in a diagnostic scenario. Accordingly, the resulting recommendation is outputted to a user for being applied by the user. For example the recommendation can be visually displayed to the user.

A further aspect of the invention is a corresponding generator unit.

A further aspect of the invention is a device, comprising:
a. an embedder unit for providing a case embedding, and
b. a generator unit for performing the above mentioned method.

A further aspect of the invention is a computer program (product) directly loadable into the internal memory of a computer, comprising software code portions for performing the steps of the above-mentioned method when said computer program (product) is running on a computer or on one of the above mentioned apparatus.

### 4. Short description of the drawings

In the following detailed description, presently preferred embodiments of the invention are further described with reference to the following figures:
- Fig. 1: shows a schematic flow chart of the method for generating at least one recommendation in accordance with the invention.
- Fig. 2: shows a schematic device in accordance with the invention.
- Fig. 3: shows the device including user interaction according to an embodiment of the invention.

### 5. Detailed description of preferred embodiments

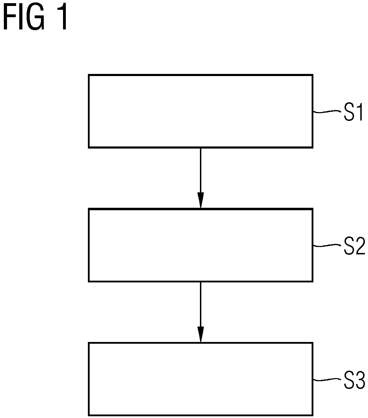

Figure 1 illustrates a flow diagram of the method for generating at least one recommendation 40 according to the invention. First, a case embedding 30 is received by a generator unit 20, S1. The case embedding 30 can be computed for a specific case or situation. Usually, the case embedding 30 is obtained based on deep learning.

Then, the one or more recommendation 40 is generated based on the case embedding 30 using a deep learning approach S2. Thereby, different deep learning approaches can be utilized, such as LSTM or GAN. For example, the LSTM is particularly suitable for processing text data or audio data, similar to Google Translate or Deepjazz, respectively.

Finally, the recommendation 40 is outputted S3. The recommendation 40 can be outputted as textual description of a solution along with a schematic drawing detailing the text to a user. This way, the diagnostic engineer as exemplary user is advantageously alleviated of the need to manually identify relevant parts of a result set with solutions being displayed and combine them into one semantically meaningful and consistent text as recommendation to e.g. the customer according to prior art. In other words, the engineer no longer has to compile the solution manually.

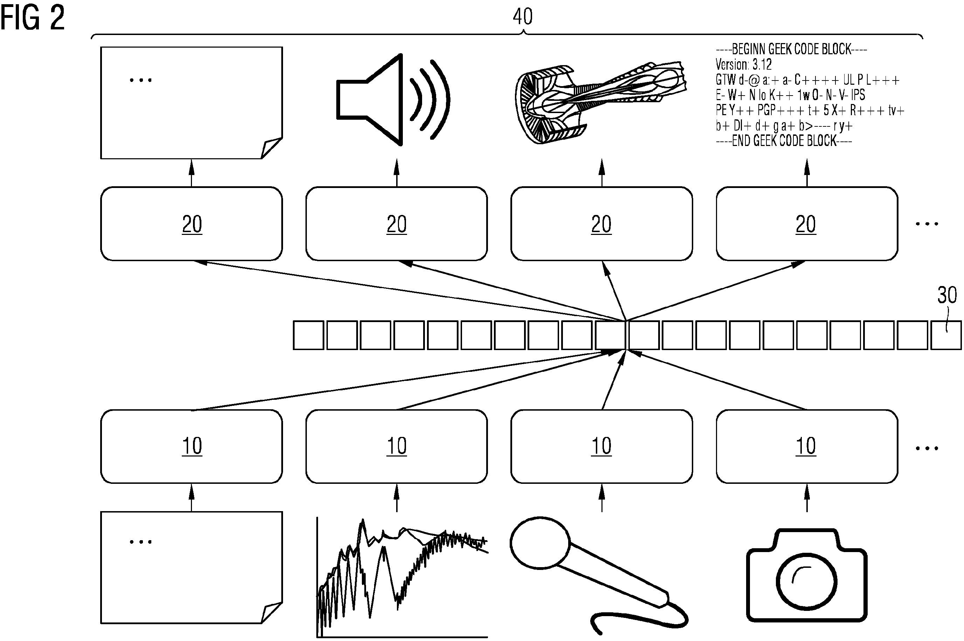

Figure 2 shows an illustrative view of the device according to the invention. As illustrated, the device has a plurality of embedder units 10 and a plurality of respective generator units 20. Alternatively, the device can have solely one embedder and generator unit, more or less units etc.

Each embedder unit 10 of the plurality of embedder units can process a specific data type, such as human-readable data or machine-readable data. The human-readable data can be text data and the machine-readable data can be video or audio data for instance. Each data or content is represented as numeric vector. Accordingly, for example the text data is represented as one vector. The concatenation of the plurality of numeric vectors results in the case embedding as unified representation, which is used as input for a generator unit 20. The generator unit 20 processes the case embedding 30. Therefore, the generator unit 20 uses an approach or method depending on the type of content to be generated, as previously outlined. For example, LSTM can be selected for text data. It follows that the each generator unit 20 of the plurality of generator units 20 can use a specific deep learning approach. Alternatively the distinct approaches can be realized in one computing unit.

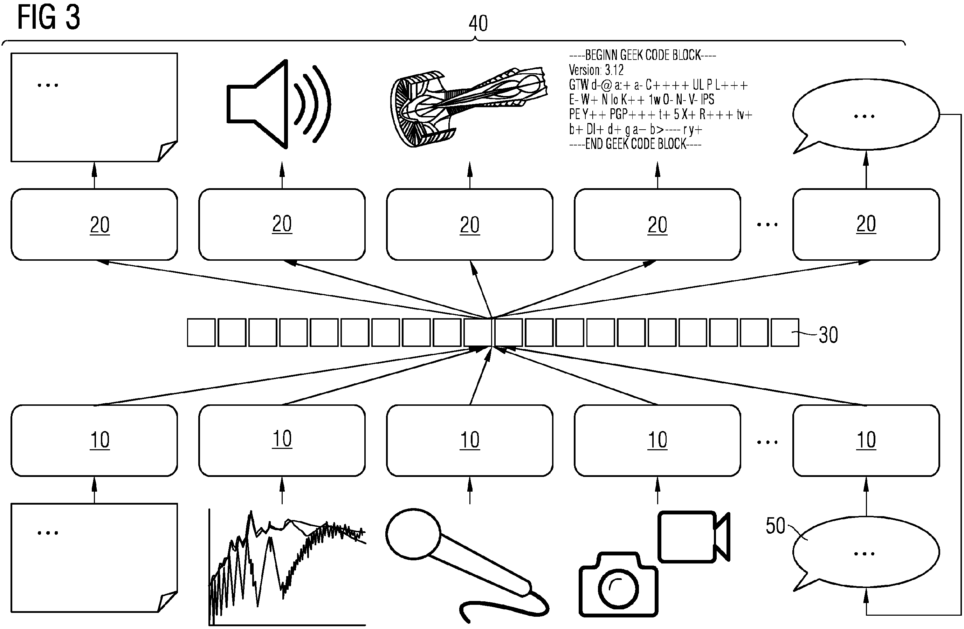

Figure 3 shows a modification of the device with user interaction according to an embodiment. As illustrated, the user interacts with the device and in particular extends the case embedding 30 with further information 50 or data content. Alternatively, each change of the case embedding is possible, including correction or deletion of information.

For example, a first recommendation 40 is outputted to the user, which indicates to check whether measurements are in range or out of range. After performing the indicated check, the user can respond to the device whether the measurements are in range or out of range.

Accordingly, the embedder unit 10 can receive the user feedback as e.g. text data after the first recommendation 40 is applied by the user or device. After receipt of the feedback, the case embedding 30 is updated on the basis of the feedback or response of the user. The generator unit 20 generates one further recommendation using the extended case embedding 30. After the generation of the further recommendation, the user receives the further recommendation. The further information indicates to check specific values for instance.

## Claims

1. Method for generating at least one recommendation (40), comprising the steps of:
a. receiving a case embedding (30) (S1),
b. generating the at least one recommendation (40) based on the case embedding (30) using deep learning (S2), and
c. outputting the at least one recommendation (40, S3).

2. Method according to claim 1, wherein the case embedding (30) is a unified representation, in particular a unified numeric vector.

3. Method according to claim 2, wherein the unified representation (30) is a concatenation of a plurality of numeric vectors, including text feature vectors or vectors representing measured data.

4. Method according to any of the preceding claims, wherein deep learning uses at least one case based reasoning learning method selected from the group, comprising: Long Short Term Memory (LSTM) recurrent neural network or deep convolutional Generative Adversarial Networks (GAN).

5. Method according to any of the preceding claims, wherein the at least one recommendation (40) is outputted as machine-readable or human-readable data.

6. Method according to any of the preceding claims, wherein the method comprises the further step of extending the case embedding (30) with further information (50) after step a. for generating the at least one recommendation (40) based on the extended case embedding (30) using deep learning (S4).

7. Method according to any of the preceding claims, outputting the at least one recommendation (40) to a user for applying the at least one recommendation (40), in particular as a solution in a diagnostic scenario.

8. Generator unit (20) for performing the method according to any of the preceding method claims.

9. Device for generating at least one recommendation (40), comprising:
a. an embedder unit (10) for providing a case embedding (30), and
b. a generator unit (20) for performing the method according to any of the preceding method claims.

10. A computer program product directly loadable into internal memory of a computer, comprising software code portions for performing the steps of any of the preceding method claims when said computer program product is running on a computer.
